(19) Europäisches Patentamt / European Patent Office / Office européen des brevets

(11) **EP 1 986 255 A2**

(12) **EUROPEAN PATENT APPLICATION**

(43) Date of publication:
**29.10.2008 Bulletin 2008/44**

(51) Int Cl.:
*H01M 4/66* $^{(2006.01)}$      *H01M 10/40* $^{(2006.01)}$
*H01M 10/38* $^{(2006.01)}$      *H01M 10/38* $^{(2006.01)}$

(21) Application number: **08154741.6**

(22) Date of filing: **17.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.04.2007 JP 2007111805**

(71) Applicant: **Nissan Motor Co., Ltd.**
**Kanagawa 221-0023 (JP)**

(72) Inventors:
• **HOSAKA, Kenji,**
c/o Nissan Motor Co., Ltd.
**Atsugi-shi Kanagawa 243-0123 (JP)**
• **HORIE, Hideaki,**
c/o Nissan Motor Co., Ltd.
**Atsugi-shi Kanagawa 243-0123 (JP)**
• **SAITO, Takamitsu,**
c/o Nissan Motor Co., Ltd.
**Atsugi-shi Kanagawa 243-0123 (JP)**
• **KANEKO, Taketo,**
c/o Nissan Motor Co., Ltd.
**Atsugi-shi Kanagawa 243-0123 (JP)**
• **SENBOKUYA, Ryoichi,**
c/o Nissan Motor Co., Ltd.
**Atsugi-shi Kanagawa 243-0123 (JP)**

(74) Representative: **Holmes, Matthew William et al**
**Nissan Motor Manufacturing (UK) Ltd**
**Intellectual Property Department**
**Cranfield Technology Park**
**Moulsoe Road**
**Cranfield, Bedfordshire MK43 0DB (GB)**

(54) **Secondary battery with non-aqueous electrolyte and corrosion-resistant collector**

(57) Disclosed herein is a non-aqueous solvent secondary battery, which has excellent long-term reliability and high thermal-resistance through the improved thermal resistance of the collectors. The non-aqueous solvent secondary battery comprises a cathode electrically coupled to a collector, an anode electrically coupled to a collector and an electrolyte layer interposed between the cathode and anode. The cathode, anode and electrolyte layer are stacked upon one another. The collector of the cathode side comprises an alloy-based metal foil with at least a portion of the collector of the cathode side having a Pitting Resistance Equivalent (PRE) of 45 or more.

**FIG. 1**

**Description**

The present invention relates to a secondary battery with non-aqueous solvent solution. Aspects of the invention relate to a battery and to a vehicle.

In the recent years, there has been a strong demand to reduce carbon dioxide emissions so as to suppress air pollution and global warming. The automobile industry expects that the introduction of Electric Vehicles (EV) or Hybrid Electric Vehicles (HEV) will lead to a reduction in carbon dioxide emissions. Thus, the automobile manufacturers have been vigorously developing a motor driving secondary battery that can be practically used in EVs or HEVs.

Particularly, a non-aqueous solvent secondary battery, for example, a lithium-ion secondary battery exhibits the highest theoretical energy level among all batteries and has been deemed the most suited motor driving secondary battery.

To improve the thermal resistance of the non-aqueous solvent secondary battery, one of the conventional techniques proposes replacing an aluminum foil, which is used as a collector in the art, with stainless steel, as disclosed in Japanese Patent Laid-open Publication No. 2001-236946.

Although a laminate battery produced according to this known teaching does not exhibit any problems when subjected to initial battery testing, such a battery exhibits some problems under long-term testing. After investigating these problems, the present applicants found that during repetitive charging and discharging of the battery, stainless steel corrodes at a cathode potential, thus generating a pin hole (pitting). Further, a dissolved metal originating from a cathode and eluted through the pin hole was precipitated and accumulated on an anode. As such, the precipitates of the dissolved metal reached and broke through a separator, which in turn caused voltage drops and short circuits. In other words, a liquid junction occurred and voltage was immediately dropped, thereby causing a short circuit. Such a battery is unreliable over an extended use and thus not practical.

It is an aim of the present invention to address this issue and to improve upon known technology. Embodiments of the invention may provide a non-aqueous solvent secondary battery that has high thermal resistance, durability and long-term reliability by improving the thermal resistance of collectors. Other aims and advantages of the invention will become apparent from the following description, claims and drawings.

Aspects of the present invention therefore provide a battery and a vehicle as claimed in the appended claims.

According to another aspect of the invention for which protection is sought there is provided a non-aqueous solvent secondary battery, comprising a cathode having a cathode material electrically coupled to a cathode collector, an anode having an anode material electrically coupled to an anode collector and an electrolyte layer interposed between the cathode and anode, wherein the cathode, anode and electrolyte layer are stacked upon one another to form an electrode, and wherein the cathode collector comprises an alloy-based metal foil and at least a portion of the cathode collector has a pitting resistance equivalent of 45 or more.

According to a further aspect of the invention there is provided a non-aqueous solvent secondary battery wherein the non-aqueous solvent secondary battery is a bipolar battery comprising a cathode having a cathode material electrically coupled to a cathode side of a collector, an anode having an anode material electrically coupled to an anode side of the collector opposite the cathode side and an electrolyte layer interposed between the cathode of one collector and the anode of another collector when collectors with respective cathodes and anodes are stacked upon one another; wherein the cathode side of the collector includes an alloy-based metal foil and at least a portion of the cathode side of the collector has a pitting resistance equivalent of 45 or more.

In an embodiment, the pitting resistance equivalent is 50 or more.

In an embodiment, only a surface of the cathode side of the collector or the cathode collector has the pitting resistance equivalent of 45 or more.

In an embodiment, a surface of the cathode collector or the cathode side of the collector was subjected to a nitridation treatment.

The battery may comprise a cathode plate, wherein an outermost cathode collector extends to form the cathode plate, an anode plate, wherein an outermost anode collector extends to form the anode plate, the plates having a higher conductivity than the collectors, and an outer casing sealing the battery, wherein the plates protrude from the outer casing.

In an embodiment, the electrolyte layer comprises a gel polymer electrolyte.

In an embodiment, the electrolyte layer comprises an all-solid-state electrolyte.

In an embodiment, the cathode active material comprises a lithium-transition metal composite oxide; and wherein the anode active material comprises a carbon or lithium-transition metal composite oxide.

The battery may comprise a plurality of the electrodes as set out above stacked one upon another.

According to another aspect of the invention, there is provided a vehicle equipped with a battery as set out above as a driving power source.

For example, one embodiment of a non-aqueous solvent secondary battery taught herein comprises a cathode having a cathode material electrically coupled to a cathode collector, an anode having an anode material electrically coupled to an anode collector, and an electrolyte layer interposed between the cathode and anode, wherein the cathode, anode and electrolyte layer are stacked upon one another. The cathode collector comprises an alloy-based metal foil and at least a portion of the cathode collector has a pitting resistance equivalent of 45 or more.

In another embodiment of a non-aqueous solvent secondary battery taught herein, a bipolar battery comprises a cathode having a cathode material electrically coupled to a cathode side of a collector and an anode having an anode material electrically coupled to an anode side of the collector opposite the cathode. An electrolyte layer is interposed between the cathode of one collector and the anode of another collector when the collectors with the cathode and anode are stacked upon one another. The cathode side of the collector comprises an alloy-based metal foil and at least a portion of the cathode side of the collector has a pitting resistance equivalent of 45 or more.

Within the scope of this application it is envisaged that the various aspects, embodiments, examples, features and alternatives set out in the preceding paragraphs, in the claims and/or in the following description and drawings may be taken individually or in any combination thereof.

The present invention will now be described, by way of example only, with reference to the accompanying drawings in which:

Fig. 1 is a schematic view of an electrode for a non-aqueous solvent secondary battery according to one embodiment of the invention;

Fig. 2 is a cross-sectional view of a bipolar battery according to one embodiment of the invention;

Fig. 3 is a perspective view of an assembled battery obtained by connecting a plurality of bipolar batteries according to one embodiment of the invention;

Fig. 4 is a schematic view of an automobile equipped with the assembled battery according to one embodiment of the invention;

Fig. 5 is a cross-sectional view of a laminate battery according to one embodiment of the invention; and

Fig. 6 is a graph depicting the number of preservation days in relation to the corrosion resistance index.

The first embodiment is a non-aqueous solvent secondary battery comprising a cathode having a cathode material electrically coupled to a collector, an anode having an anode material electrically coupled to a collector and an electrolyte layer interposed between the cathode and anode. The cathode, anode and electrolyte layer are stacked upon one another. The collector of the cathode side comprises an alloy-based metal foil. Further, at least a portion of the collector of the cathode side has a Pitting Resistance Equivalent (PRE) of 45 or more.

In embodiments herein, the cathode and anode materials constitute a cathode active material layer and an anode active material layer, respectively. Further, in addition to the active materials, the cathode and anode materials may also include other elements such as, for example, a conductive auxiliary agent, binder, supporting salt (lithium salt), etc. The non-aqueous solvent secondary battery disclosed herein includes the cathode, anode and electrolyte layer interposed therebetween.

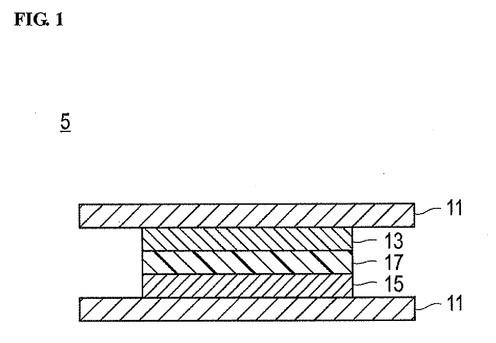

An embodiment of an electrode 5 for the non-aqueous solvent secondary battery disclosed herein is described with reference to Fig.1. However, it should be noted that the technical scope of the invention herein is not limited to such an embodiment. Herein, the collectors, active materials, conductive auxiliary agents, binders, supporting salts (lithium salts), electrolytes and compounds added as necessary are not specifically limited, but rather can be properly selected or have conditions depending on the use of the battery and conventional knowledge combined with the teachings herein. Embodiments of electrodes for the non-aqueous solvent secondary battery are described in detail.

A collector 11 at the side of a cathode active material layer 13 is made from a metal foil, which may comprise single or plural metallic elements and/or single or plural nonmetallic elements. Examples of the metal foil for the collector 11 at the cathode side include, but are not limited to, alloy-based metal foils such as stainless steel (SUS) foils, aluminum alloys and the like. A stainless steel foil may be used as the metal foil of the collector 11 at the cathode side.

Aluminum generally used for a conventional collector has a relatively low melting point of about 500°C, whereas stainless steel can sustain up to 1200°C. Thus, when stainless steel foil is used for the collector, the electrode has a remarkably improved thermal resistance. In this regard, the collector provides an electrode having a better thermal resistance than conventional electrodes. Further, the collector generally has a thickness of 1 to 30 $\mu$m, although it is certainly not limited thereto and may have a thickness outside of such a range. The size of the collector is determined depending on the use of the battery. For a large-sized electrode used in a large battery, a collector having a large area is used. For a small-sized electrode used in a small battery, a collector having a small area is used.

For the embodiments disclosed herein, at least a portion of the collector at the cathode side has PRE of 45 or more. PRE is defined by the following equation:

$$PRE = \text{Chrome (Cr)}\% + 3.3 \times \text{Molybdenum(Mo)}\% + 20 \times \text{Nitrogen (N)}\% \quad (1)$$

The content of each element involved in PRE can be obtained by a compositional analysis such as X-ray photoelectron spectroscopy (XPS) and the like. The inventors have found that corrosion and pitting of the electrode, the thermal resistance, as well as the durability of the battery related to the corrosion are influenced by the relationship between the contents of three elements (Cr, Mo and N) represented by Equation 1. If PRE is 45 or more, then the corrosion resistance is sufficient to significantly improve the long-term reliability of the non-aqueous solvent secondary battery. With a PRE of 45 or more, both the voltage drop and short circuit caused by metal elution and pin hole generation at the cathode can be prevented. In turn, precipitation of dissolved metal at the anode resulting therefrom is prevented. At PRE values of 50 or more, pitting of the collector does not substantially occur. As such, the long-term reliability of the non-aqueous solvent secondary battery is not influenced by the collector, thereby considerably improving its long-term reliability. Because the non-aqueous solvent secondary battery is substantially and completely protected from any voltage drops and short circuits caused by the precipitation of metal at the anode during practical use, its reliability does not decrease even after repetitive charging and discharging.

In the disclosed embodiments, at least a portion of the collector at the cathode side has PRE of 45 or more. Either the entire collector or a certain portion of the collector may have PRE of 45 or more to prevent the corrosion problems. It is sufficient for only a surface of the collector at the cathode side to have the above-described PRE level. Since pitting occurs on the cathode and propagates therein, it is sufficient that only the surface of the collector, being the outermost surface of the cathode, has a high pitting resistance of PRE of 45 or more. Herein, the term "surface" means a part of the surface of the collector at the cathode side to a depth of several to several dozens of nanometers therefrom. Such a collector can be manufactured by an extremely simple process and achieve cost reduction, low weight and improved long-term reliability.

Methods of manufacturing the collector at the cathode side according to embodiments herein is not limited to any particular method and thus can correspond to any method known in the art. For example, the collector may be made from alloys comprising predetermined amounts of Cr and/or Mo. Alternatively, the collector may have formed on its surface a film (thin film) comprising Cr, Mo and/or N by: nitridation (nitriding treatment) such as gas nitriding, salt bath nitriding, gas soft nitriding and plasma nitriding; Physical Vapor Deposition (PVD) such as vacuum deposition, ion plating, pulse laser deposition (PLD) and sputtering; Chemical Vapor Deposition (CVD) such as thermal CVD, plasma CVD, laser CVD, epitaxial CVD, atomic layer CVD and catalyst CVD (cat-CVD); molecular beam epitaxy (MBE); spray pyrolysis deposition (SPD); a sol-gel process; a dip-coating process; metal organic deposition (MOD); and combinations thereof. Advantageously, the nitriding treatment is performed on the surface of the collector. The nitriding treatment is performed only on the surface of at least the collector at the cathode side, thereby preventing pitting of the collector. According to the PRE equation, the addition of N is significantly effective compared to the addition of Cr and Mo in view of higher PRE. Specifically, it is 20 times more advantageous than the addition of Cr and 6 times more advantageous than the addition of Mo. Thus, the nitriding treatment is not only simple, but also can realize cost reduction, considerable weight reduction and long-term reliability.

According to the embodiments herein, the stainless steel foil is used for the collector at the cathode side and at least a portion of the collector at the cathode side has PRE of 45 or more. As such, the collector can avoid the generation of pitting compared to conventional techniques, thus enabling the manufacture of a non-aqueous solvent secondary battery with long-term reliability.

A collector 11 at the side of an anode active material layer 15 comprises a conductive material. Examples of the collector 11 at the anode side include, but are not limited to, aluminum foils, nickel foils, bronze foils, stainless steel (SUS) foils and the like. Since corrosion (pitting) generally occurs at the cathode as described above, pitting resistance is not taken into consideration when designing the anode. The collector generally has a thickness of 1 to $30\mu$m but may have a thickness outside of such a range.

The size of the collector is determined depending on the use of the battery. For a large-sized electrode used in a large battery, a collector having a large area is used. For a small-sized electrode used in a small battery, a collector having a small area is used.

Active material layers 13 and 15 are formed on the collectors 11. The active material layers 13 and 15 comprise an active material that provides a primary function in charge/discharge reactions.

Examples of the cathode active material contained in the cathode active material layer 13 include, but are not limited to, a lithium-transition metal composite oxide, a lithium-metal phosphate compound and a lithium-transition metal sulfate compound. For a battery with excellent capacity and output characteristics, the lithium-transition metal composite oxide can be used. Specifically, examples of the lithium-transition metal composite oxide include a lithium-manganese composite oxide, a lithium-nickel composite oxide, a lithium-cobalt composite oxide, a lithium-iron composite oxide, a lithium-nickel-cobalt composite oxide, a lithium-manganese-cobalt composite oxide, a lithium-nickel-manganese composite oxide, a lithium-nickel-manganese-cobalt composite oxide, etc. If necessary or desirable, the cathode active material may comprise a combination of the above materials.

Examples of an anode active material contained in the anode active material layer 15 include, but are not limited to, carbon such as graphite and amorphous carbon, a lithium-transition metal compound, a lithium-transition metal composite oxide, a metallic material and lithium alloys such as lithium-aluminum alloys, lithium-tin alloys, lithium-silicon alloys and the like. For a battery with excellent capacity and output characteristics, carbon or the lithium-transition metal composite oxide can be used. Examples of the lithium-transition metal composite oxide are the same as described above. If necessary or desirable, the anode active material may comprise a combination of the above materials.

In certain embodiments, the cathode active material has an average particle diameter of 3 $\mu$m or less. In some, an average particle diameter of 2 $\mu$m or less is desirable, and 1 $\mu$m or less is even more desirable. Although the lowest value of the average particle diameter of the cathode active material is not specifically limited in view of the advantageous effects of the invention, the cathode active material desirably has an average particle diameter of 0.01 pm or greater in certain embodiments. More beneficially, an average particle diameter of 0.1 $\mu$m or greater is used in view of the higher output performance of the battery, higher dispersibility and anti-cohesion of the active material.

In this invention, the average particle diameter of the active material can be measured by means of a Scanning Electron Microscope (SEM) or a Transmission Electron Microscope (TEM).

If necessary, the active material layers 13 and 15 may contain a conductive auxiliary agent, a binder, a supporting salt (lithium salt), an ion-conductive polymer and the like. When the ion-conductive polymer is contained therein, a polymerization initiator for polymerization of the polymer may be included.

The conductive auxiliary agent functions to improve the conductivity of the active material layer. Examples of the conductive auxiliary agent include carbon black such as acetylene black, carbon powder such as graphite, carbon fibers such as Vapor Grown Carbon Fiber (VGCF®) and the like.

The binder is an additive that settles the cathode and anode materials on the collectors. Specific examples of the binder include: thermoplastic resins such as polyvinylidene difluoride (PVdF), polyvinyl acetate, polyimide, urea resin and the like; thermosetting resins such as epoxy resin, polyurethane and the like; and rubber-based materials such as butyl rubber, styrene-based rubber and the like.

Examples of the supporting salt (lithium salt) include Li($C_2F_5SO_2$)$_2$N, lithium bispentafluoroethylsulfonylimide (LiBETI), $LiPF_6$, $LiBF_4$, $LiC10_4$, $LiAsF_6$, $LiCF_3SO_3$ and the like.

Examples of the ion-conductive polymer include polyethylene oxide (PEO) and polypropylene oxide (PPO) based polymers. Here, such a polymer may be the same as or different from an ion-conductive polymer used for an electrolyte layer of a battery employing the electrode taught herein.

A polymerization initiator is added to the active material for operating on a cross-linking group of the ion-conductive polymer so that a cross-linking reaction can proceed. The polymerization initiator is classified into a photopolymerization initiator, a thermal polymerization initiator, etc., depending on the external factors for operating as an initiator. Examples of the polymerization initiator include azobisisobutylonitrile (AIBN) as a thermal polymerization initiator, benzildimethylketal (BDK) as a photopolymerization initiator, and the like.

Although not specifically limited, the content of the active material is 70 to 95% by mass of each of the cathode and anode materials, and more beneficially in the range of 80 to 90% by mass. Within such a range, a desired battery is obtained with a balance of high energy density and high output performance.

Although not specifically limited, the content of the conductive auxiliary agent is in the range of 1 to 20% by mass of each of the cathode and anode materials, and more beneficially in the range of 5 to 10% by mass. Within such a range, a desired battery is obtained with a balance of high energy density and high output performance.

Besides the conductive auxiliary agent, the contents of other additives contained in the active material layers 13 and 15 are not specifically limited and may be properly adjusted in view of the conventional knowledge in the art with respect to a non-aqueous solvent secondary battery such as a lithium-ion secondary battery.

The thicknesses of the active material layers 13 and 15 are not limited to any particular value and may be adjusted in view of the conventional knowledge in the art with respect to a non-aqueous solvent secondary battery such as the lithium-ion secondary battery. For example, the active material layers 13 and 15 can desirably have a thickness of about 10-100 $\mu$m, and more specifically about 20-50 $\mu$m. If the active material layers 13 and 15 have a thickness of about 10 $\mu$m or more, then the capacity of the battery can be sufficiently secured. Further, if the active material layers 13 and 15 have a thickness of about 100 $\mu$m or less, then an increase in internal resistance due to the difficulty in diffusing lithium ions deep within the electrode and to the collector can be suppressed. The electrolyte layer 17 is described in detail with respect to the second embodiment.

In a second embodiment of the secondary battery, the battery is formed by using the electrode for the non-aqueous solvent secondary battery according to the first embodiment.

The configuration of the electrode according to the first embodiment can be applied to both laminate batteries and bipolar batteries. Hereinafter, the configurations of these two batteries are described.

First described is a laminate non-aqueous solvent secondary battery, hereinafter referred to as a laminate battery.

The laminate non-aqueous solvent secondary battery includes a cathode having a cathode material electrically coupled to both sides of one collector, an anode having an anode material electrically coupled to both sides of another collector and an electrolyte layer having a separator interposed between the cathode and anode when the cathode, anode and electrolyte layer are stacked upon one another. The cathode and anode are identical to those of the non-aqueous solvent secondary battery according to the first embodiment.

In the laminate battery, since the generation of a pinhole at a cathode potential can be prevented, it is possible to prevent the precipitation of dissolved metal that can occur at the anode. As a result, the voltage drop and short circuit of the battery can be prevented, resulting in superior long-term reliability.

Next described is a bipolar non-aqueous solvent secondary battery, hereinafter referred to as a bipolar battery.

The bipolar non-aqueous solvent secondary battery includes a cathode having a cathode material electrically coupled to one side of a collector, an anode having an anode material electrically coupled to the other side of that same collector and an electrolyte layer interposed between the cathode of one collector and the anode of another collector when stacked. A plurality of cathode, anode and electrolyte layers are stacked upon one another. The cathode and anode compositions are identical to those of the non-aqueous solvent secondary battery according to the first embodiment.

The bipolar battery can provide much higher output density and voltage than the laminate battery. In the bipolar battery, however, liquid junction occurs as soon as the pin hole is generated, thereby causing a drastic voltage drop. Accordingly, the prevention in the first embodiment of pin hole pitting at the cathode potential can be achieved in the bipolar battery, resulting in superior long-term reliability and high output density.

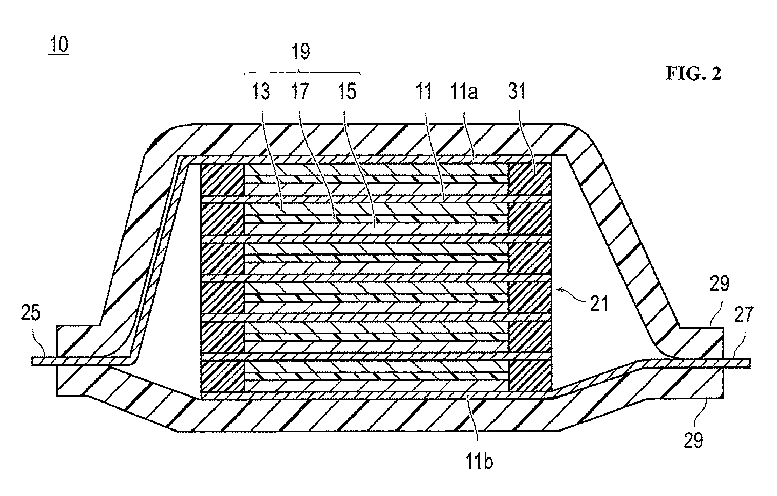

Fig. 2 is a cross-sectional view of the bipolar battery disclosed herein. Hereinafter, the embodiment is described in detail with reference to the bipolar battery shown in Fig. 2 as an illustrative example. However, it should be noted that the invention is not limited to such an example.

The bipolar battery 10 of this embodiment includes a battery element 21, which has an approximately rectangular shape and is responsible for performing charge/discharge reactions, and a laminate sheet 29 provided as an outer casing to seal the battery element 21.

As shown in Fig. 2, the battery element 21 of the bipolar battery 10 includes a plurality of bipolar electrodes, each of which has a cathode active material layer 13 and an anode active material layer 15 formed on opposite sides of a collector 11. The bipolar electrodes are stacked along with electrolyte layers 17 to form the battery element 21. Here, the bipolar electrodes and the electrolyte layers 17 are stacked such that a cathode active material layer 13 of one bipolar electrode faces an anode active material layer 15 of another adjacent bipolar electrode via an electrolyte layer 17 interposed therebetween.

The cathode active material layer 13, electrolyte layer 17 and anode active material layer 15 disposed adjacent to each other constitute a unit cell layer 19. Thus, the bipolar battery 10 has a configuration wherein unit cell layers 19 are stacked on top of one another. Additionally, an insulating layer 31 is formed on outer circumferences of the unit cell layers 19 to insulate the adjacent collectors 11 from one another. In the battery element 21, the cathode active material layer 13 is formed on the interior side of the outermost collector 11a of the cathode side, and the anode active material layer 15 is formed on interior side of the outermost collector 11b of the anode side.

In the bipolar battery 10 shown in Fig. 2, the outermost collector 11a extends to form a cathode plate or terminal 25, which protrudes from the laminate sheet 29. Further, the outermost collector 11b extends to form an anode plate or terminal 27, which protrudes from the laminate sheet 29 as well.

Constitutional members of the bipolar electrode 10 according to this embodiment are described below. The elements of the electrodes have been described above, and thus a description thereof will be omitted herein. Embodiments are not limited to the following configuration, but may employ any conventional type of configuration.

An electrolyte forming the electrolyte layer 17 is not limited to a specific electrolyte, but can employ a liquid electrolyte or a polymer electrolyte.

The liquid electrolyte contains a lithium salt as a supporting salt dissolved in an organic solvent as a plasticizer. Examples of the organic solvent as the plasticizer include carbonates such as ethylene carbonate (EC), propylene carbonate (PC), dimethyl carbonate (DMC), diethyl carbonate (DEC), and the like. Further, the supporting salt (lithium salt) can employ a compound, such as LiBETI and the like, which can be added to the active material layer of the electrode.

The polymer electrolyte may be a gel polymer electrolyte, also referred to as a gel electrolyte, which contains an electrolytic solution and a genuine polymer electrolyte not containing the electrolytic solution.

The gel polymer electrolyte is formed by injecting the liquid electrolyte into a matrix polymer, or host polymer, consisting of an ion-conductive polymer. Examples of the ion-conductive polymer used as the matrix polymer include, but are not limited to, polyethylene oxides (PEO), polypropylene oxides (PPO), polyvinylidene difluoride (PVdF), hexafluoropropylene (HFP), PAN, PMMA and copolymers thereof. Electrolytic salts, such as lithium salts and the like, are highly soluble in such polyalkylene oxide-based polymers. Further, the plasticizer may employ, for example, an electrolyte solution used for a non-aqueous solvent secondary battery such as a typical lithium-ion battery.

When the electrolyte layer 17 is formed of the liquid electrolyte or the gel polymer electrolyte, a separator may be used in the electrolyte layer 17. A specific example of the separator may include a fine porous film formed of polyolefin such as polyethylene or polypropylene.

The genuine polymer electrolyte has a configuration where a supporting salt, such as lithium salt, is dissolved in the matrix polymer and does not contain an organic solvent as the plasticizer. Thus, when the electrolyte layer 17 is formed of the genuine polymer electrolyte, liquid does not leak from the battery, thereby improving the reliability of the battery.

The matrix polymer of the gel polymer electrolyte forms a cross-linking structure, thus exhibiting excellent mechanical strength. In order to form the cross-linking structure, polymerization such as thermal polymerization, ultraviolet polymerization, radiation polymerization or electron beam polymerization is carried out on a polymer for forming a polymer electrolyte (e.g., PEO or PPO) by using a suitable polymerization initiator.

When the electrolyte layer is formed of the gel polymer electrolyte, the electrolyte does not have any fluidity. Thus, the bipolar battery can be manufactured by a simple process and has improved seal efficiency. Examples of a host polymer and a plasticizer for the gel polymer electrolyte are the same as those described above.

The electrolyte layer can also be formed of an all-solid-state electrolyte. When the electrolyte layer is formed of the all-solid-state electrolyte, the electrolyte does not have any fluidity and leakage of the electrolyte to the collector does not occur. This reliably blocks the ion conduction between the respective layers.

In the bipolar electrode 10, the insulating layer 31 is typically formed around each of the unit cell layers 19. The insulating layer 31 prevents any contact between adjacent collectors 11 within the battery or short circuiting caused by slight misalignment between ends of the unit cell layers 19 in the battery element 21. Incorporating the insulating layer 31 secures the long-term reliability and safety of the battery, thereby providing the high-quality bipolar battery 10.

The insulating layer 31 can have insulation properties, sealing properties to protect against the separation of solid electrolyte or moisture infiltration from surroundings and thermal resistance properties at the battery-operating temperature. Examples of a material for the insulating layer 31 include urethane resins, epoxy resins, polyethylene resins, polypropylene resins, polyimide resins, rubbers, and the like. Urethane resins and epoxy resins specifically provide corrosion resistance, chemical resistance, production simplification (film forming performance) and economic efficiency.

In the bipolar battery 10, plates (a cathode plate 25 and an anode plate 27) electrically connected to the outermost collectors 11a and 11b are drawn out of the laminate sheet 29 for the purpose of extracting current from the battery. Specifically, the cathode plate 25 is electrically connected to the outermost collector 11a of the cathode side, and the anode plate 27 is electrically connected to the outermost collector 11b of the anode side. Both plates are drawn out of the laminate sheet 29.

Material for the plates 25, 27 is not limited to a specific material. Known material used for a plate of a conventional bipolar battery can be used. For example, aluminum, copper, titan, nickel, stainless steel (SUS) and alloys thereof can be used for the material of the plates. In addition, the cathode plate 25 and anode plate 27 may comprise the same or different materials. Although the plates 25 and 27 extend from the outermost collectors 11a and 11b in this embodiment, separate plates may be connected to the outermost collectors.

In the bipolar battery of the embodiments, the entire projected sides of at least terminal electrodes of the cathode and anode are covered with the plates, the plates having high conductivity and having an outer casing described below. By configuring a current extracting part to have a low resistance, the extraction of current in the surface direction can be carried out at a low resistance. As a result, the battery has high power output. Specifically, the plate is formed of a material that has a lower resistance and a higher thickness than collectors made of stainless steel. The material can have a thickness of 50-500 $\mu$m, and more specifically 100-300 $\mu$m. Also, the material can have a conductivity of 10 $\times$ 10$^{-6}$ $\Omega$·cm or less, which is the conductivity of stainless steel, and more specifically 1 $\times$ 10$^{-6}$ - 5 $\times$ 10$^{-6}$ $\Omega$·CM.

In the bipolar battery 10, the battery element 21 is housed in the outer casing such as the laminate sheet 29 and the like to protect the battery element 21 from external impact or circumstances in use. The outer casing is not specifically limited, but can be selected from any number of known casings. A polymer-metal composite laminate sheet having an excellent thermal conductivity is used since it can effectively transfer heat from a heat source of a vehicle to quickly heat the inside of the battery to a battery operating temperature.

The bipolar battery 10 of this embodiment employs a bipolar electrode where the electrodes taught herein are formed on opposite sides of the collector 11. Thus, the bipolar battery of this embodiment has an excellent output performance.

The second embodiment is suited for use as a secondary battery used under high-output conditions. High-output conditions are those requiring an output of 20C or more, and advantageously 50C or more or 100C or more.

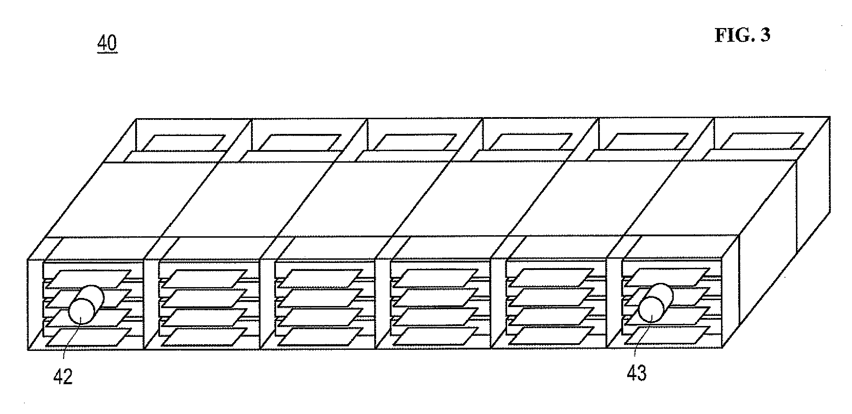

According to a third embodiment, a plurality of secondary batteries according to the first and/or second embodiments are connected in parallel and/or series to form an assembled battery. Fig. 3 is a perspective view of one assembled battery according to the present embodiment.

As shown in Fig. 3, the assembled battery 40 is formed by interconnecting the bipolar batteries of the second embodiment. The bipolar batteries 10 are connected to one another by connecting cathode plates 25 and anode plates 27 of the bipolar batteries 10 via a bus bar. Electrode terminals 42 and 43 are formed as electrodes of the entire assembled battery 40 at one side of the assembled battery 40.

Connection of the bipolar batteries 10 in the assembled battery 40 can be suitably performed by any known method without being limited to a particular method. For example, welding such as ultrasonic welding and spot welding, or fastening by means of rivets or caulking, can be employed. According to such methods, the assembled battery 40 can have an improved long-term reliability and excellent output performance since each of the bipolar batteries 10 in the assembled battery 40 has an excellent output performance.

The bipolar batteries 10 in the assembled battery 40 may be connected only in parallel, only in series or in a combination thereof. Accordingly, the capacity and voltage of the assembled battery can be freely adjusted.

According to a fourth embodiment, the bipolar battery 10 of the second embodiment or the assembled battery 40 of the third embodiment is provided as a motor driving power source in a vehicle. Examples of the vehicle using the bipolar battery 10 or the assembled battery 40 as the motor driving power source include hybrid cars, such as an electric car not using gasoline, series or parallel hybrid cars, fuel-cell cars with a motor-driven wheel and other vehicles (e.g., electric vehicles). With the secondary battery herein, the vehicles can have a long life span and high reliability compared to conventional ones.

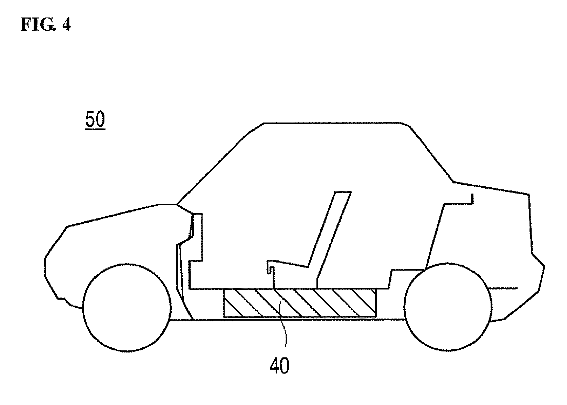

Fig. 4 illustrates a car 50 equipped with the assembled battery 40. The assembled battery 40 of the car 50 has the aforementioned characteristics. Accordingly, the car 50 equipped with the assembled battery 40 has not only an excellent output performance, but also long life span and high reliability.

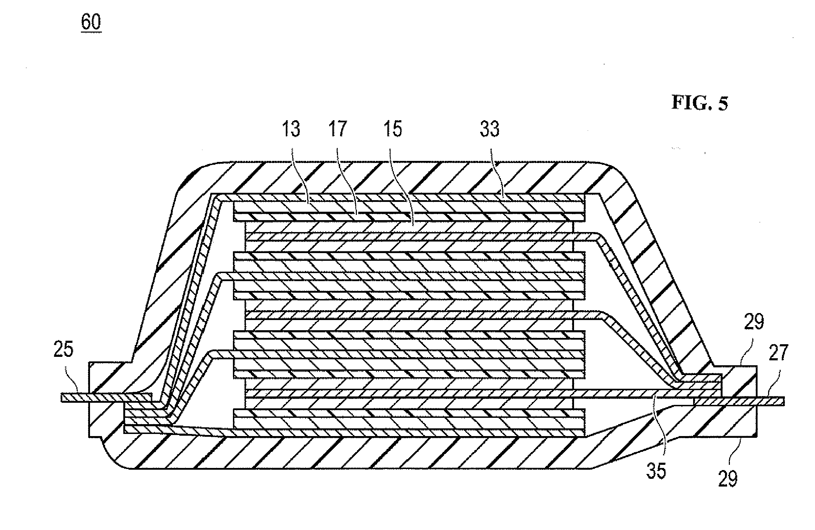

Although several embodiments have been described above, the invention is not limited to these embodiments. For instance, although the second embodiment has been described with an example of the bipolar non-aqueous solvent secondary battery (bipolar battery), it can be applied to other types of non-aqueous solvent secondary batteries. For illustration, Fig. 5 is a schematic cross-sectional view of a laminate non-aqueous solvent secondary battery 60.

Hereinafter, the effects of the electrode for the battery disclosed herein are described with reference to the following examples and comparative examples. It should be noted, however, that the following examples are not meant to be limiting.

First, an experiment was performed with respect to a bipolar battery.

To produce the cathode, 85 wt% spinel-type lithium manganese oxide ($LiMn_2O_4$) as a cathode active material, 5 wt% acetylene black as a conductive auxiliary agent and 10 wt% polyvinylidene difluoride (PVdF) as a binder were mixed and dispersed in N-methyl-2-pyrrolidone (NMP) as a slurry viscosity adjusting solvent, thereby preparing a cathode active material slurry.

After preparing stainless steel foils with a thickness of 15 $\mu$m and a composition equal to that of the collector described for Examples 1 to 4 and Comparative Examples 1 to 7, one side of each of the collectors was coated with the slurry and dried, thereby preparing a cathode having a 30 $\mu$m thick active material layer.

To produce the anode, 85 wt% hard carbon as an anode active material, 5 wt% acetylene black as a conductive auxiliary agent and 10 wt% polyvinylidene difluoride (PVdF) as a binder were mixed and dispersed in N-methyl-2-pyrrolidone (NMP) as a slurry viscosity adjusting solvent, thereby preparing an anode active material slurry.

The opposite side of each of the collectors, one side of which was coated with the cathode active material slurry, was coated with the anode active material slurry and dried, thus preparing an anode having a 30 $\mu$m thick active material layer.

To complete the production of the electrode, the respective electrodes were pressed (via heat and pressure) and cut to 140 $\times$ 90 mm. The electrodes were prepared to have a 10-mm wide peripheral area not coated with an electrode material to produce a bipolar electrode having a 120 $\times$ 70 - mm electrode part and a 10-mm wide peripheral area for sealing. Thus, the bipolar electrode having the cathode on one side of each collector and the anode on the opposite side thereof was completed.

To produce the electrolyte, ethylene carbonate (EC) and propylene carbonate (PC) were mixed in a volumetric ratio of 1:1 so as to prepare a plasticizer (organic solvent). Then, $LiPF_6$ as a lithium salt was added up to 1 M to the plasticizer, thereby preparing an electrolytic solution. Then, 90 wt% of the electrolytic solution and 10 wt% of a PVdF-HFP copolymer containing 10 mol% HFP-polymer as a host polymer were mixed and dispersed in DMC as a viscosity adjusting solvent, thereby preparing an electrolyte.

Next, the electrolyte was applied to the cathode and anode present on the opposite sides of the collector, followed by drying DMC, thus completing the manufacture of the bipolar electrode where the gel electrolyte was permeated.

To prepare the gel electrolyte layer, the electrolyte was applied to both sides of a polypropylene porous-film separator with a thickness of 20 $\mu$m, followed by drying DMC, thereby obtaining a gel polymer electrolyte layer.

For the lamination, the gel electrolyte layer was placed on the cathode of the bipolar electrode and the PE porous-film was placed as a sealing material in a width of 23 mm around the gel electrolyte layer. The bipolar electrodes were laminated in five layers, followed by pressing the sealing part under heat and pressure up and down and fusing to seal the respective layers. Pressing conditions were 0.2 MPa, 160 °C and five seconds.

Plates having a high conductivity were prepared by extending a portion of Al plate, which was 130 mm in length × 80 mm in width × 100 μm in thickness and covered the entire projected side of a bipolar battery element, to the outside of the projected side of the bipolar battery element. The bipolar battery element was put into these plate terminals and vacuum-sealed using an aluminum laminate to cover the plates and battery element. Then, the entire bipolar battery element was pressed at an atmospheric pressure from both sides, thereby completing a bipolar battery with an intensified contact between a strong electric current terminal and the battery element.

The collector used in the first example was a 20 μm thick stainless steel foil collector of stainless steel having a chemical composition of 23Cr-25Ni-5.5Mo-0.2N (PRE: 45).

The collector used in the second example was a 20 μm thick stainless steel foil collector of stainless steel having a chemical composition of 23Cr-25Ni-7Mo-0.15N (PRE: 49).

The collector used in the third example was a 20 μm thick stainless steel foil collector of stainless steel having a chemical composition of 23Cr-25Ni-7.5Mo-0.2N (PRE: 52).

The collector used in the fourth example was a 20 μm thick stainless steel foil collector with only one surface (thickness: several to several dozens of nanometers) having a chemical composition of 17Cr-12Ni-2Mo-1.3N (PRE: 50), wherein the surface was obtained by plasma nitridation on one side of 316L stainless steel foil having a chemical composition of 17Cr-12Ni-2Mo to be coated with a cathode material.

The collector used in the first comparative example was a 20 μm thick stainless steel foil collector of 316L stainless steel having a chemical composition of 17Cr-12Ni-2Mo (PRE: 24).

The collector used in the second comparative example was a 20 μm thick stainless steel foil collector of stainless steel having a chemical composition of 18Cr-15Ni-2Mo-0.3N (PRE: 30).

The collector used in the third comparative example was a 20 μm thick stainless steel foil collector of stainless steel having a chemical composition of 20Cr-15Ni-2Mo-0.3N (PRE: 32).

The collector used in the fourth comparative example was a 20 μm thick stainless steel foil collector of stainless steel having a chemical composition of 18Cr-15Ni-4Mo-0.15N (PRE: 34).

The collector used in the fifth comparative example was a 20 μm thick stainless steel foil collector of stainless steel having a chemical composition of 25Cr-6Ni-3.3Mo-0.15N (PRE: 39).

The collector used in the sixth comparative example was a 20 μm thick stainless steel foil collector of stainless steel having a chemical composition of 25Cr-6Ni-3.5Mo-0.2N (PRE: 41).

The collector used in the seventh comparative example was a 20 μm thick stainless steel foil collector of stainless steel having a chemical composition of 25Cr-6Ni-4Mo-0.25N (PRE: 43).

To evaluate the examples and comparative examples, high temperature durability testing was performed on the batteries of Examples 1 to 4 and Comparative Examples 1 to 7. For the test, the batteries were charged at a constant current of 40 mA up to 21 V (full). Then, the voltage was monitored with the batteries kept in a 60 °C hot tub. The lives of the batteries were determined at a point where the voltages of the batteries decreased below a total voltage of 5 V (1 V for each layer) or less due to deterioration, corrosion and the like of the batteries. Table 1 shows the number of days each battery was preserved.

Table 1

|  | First Example | Second Example | Third Example | Fourth Example | First Comparative Example | |
|---|---|---|---|---|---|---|
| Preservation days | 321 days | 379 days | 600 days or more * | 600 days or more * | 17 days | |
|  | Second Comparative Example | Third Comparative Example | Fourth Comparative Example | Fifth Comparative Example | Sixth Comparative Example | Seventh Comparative Example |
| Preservation days | 24 days | 30 days | 35 days | 41days | 112 days | 132 days |

|  | First Example | Second Example | Third Example | Fourth Example | First Comparative Example | |
|---|---|---|---|---|---|---|
| PRE | 45 | 49 | 52 | 50 | 24 | |
|  | Second Comparative Example | Third Comparative Example | Fourth Comparative Example | Fifth Comparative Example | Sixth Comparative Example | Seventh Comparative Example |
| PRE | 30 | 32 | 34 | 39 | 41 | 43 |

* Problems were not observed even after 600 days or more since no voltage drop had occurred.

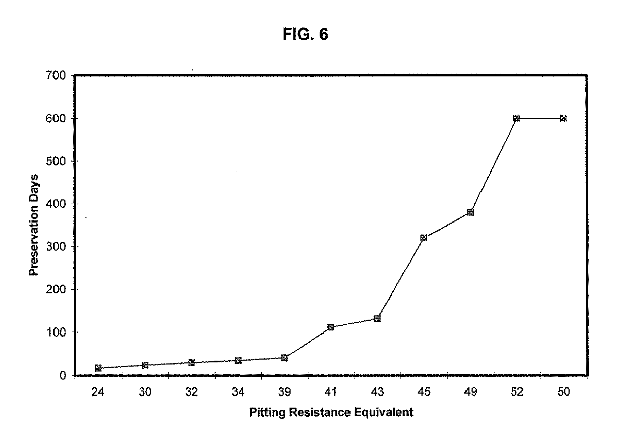

As shown in Fig. 6, comparing the first to seventh Comparative Examples with the first to fourth Examples of Table 1, it is apparent that the examples using the embodiments disclosed herein had significantly longer lives as counted in preservable days. It was confirmed that all the batteries of the first and second Examples and the first to seventh Comparative Examples experienced a rapid voltage drop before the practical lifespan of a battery in normal use. When disassembling the batteries that experienced the voltage drop, pin holes were found on the alloy metal foils used as the collectors. Further, since the third and fourth Examples exhibited essentially no voltage drop even after 600 days, which is an excellent life span for practical usage, it can be concluded that the third and fourth Examples had remarkably superior thermal resistance, durability and reliability.

In addition, it is apparent from the test that the batteries having PRE as disclosed herein had considerably improved long-term reliability. Not being bound to any specific theory, it is believed that halogen ions, which are chloride ions in water, cause pitting by a self-catalyzed reaction according to the general corrosion pitting mechanism. In the non-aqueous solvent secondary battery taught herein, it is believed that fluorine functions as halogen ions to cause pitting. Hence, metal elements such as Cr and Mo form an excellent oxidation film. Also, the nitridation process preventing the progress of corrosion can suppress the pitting of the battery as well in water, particularly seawater.

It was discovered that if the batteries had PRE of 45 or more, then the corrosion resistance was remarkably improved, and the batteries experienced no corrosion problems that would impair practical use. Not being bound to any particular theory, it is believed that the corrosion mechanism has a conversion point (inflection point) near PRE of 45, thereby drastically increasing the corrosion resistance.

As further found, if the batteries had PRE of 50 or more, then a rapid voltage drop resulting from corrosion did not occur. Rather, normal voltage drops resulting from deterioration of the batteries due to normal use occurred. Thus, the battery life was extended such that the life was equivalent to those without stainless steel.

It should be noted that the fourth Example, subjected to nitridation only on the surface of the cathode, resulted in no pitting at a cathode potential. Because cathode pitting can be prevented by performing nitridation only on the surface of the cathode, the battery reached a level not having any problem in practical use.

Next, an experiment was performed on a laminate battery.

To produce the cathode for the laminate battery, the process of manufacturing a cathode is the same as in the bipolar battery. Thus, detailed descriptions thereof are omitted herein.

To produce the anode for the laminate battery, an anode active material slurry was prepared in the same manner as in the bipolar battery. An alloy-based collector (Examples 5 to 8 and Comparative Examples 8 to 14), which is different from a collector for a cathode, was coated with the anode slurry and dried to prepare an anode.

The cathode and anode were pressed by a heating roll so as not to break through a film. Then, the electrodes were cut to a 90 $\times$ 90 mm and joined together, with a separator (polyolefin porous film, thickness: 20 $\mu$m) of 95 $\times$ 95 mm interposed therebetween. The cathode and anode were each welded to plates and accommodated in an aluminum laminate, followed by injecting an electrolyte solution (PC + EC + DEC (volumetric ratio of 1:1:2) 1M LiPF$_6$) and sealing, thereby completing a unit cell.

To create the fifth example with the laminate battery, a 20 $\mu$m thick stainless steel foil collector of stainless steel having a chemical composition of 23Cr-25Ni-5.5Mo-0.2N (PRE: 45) was used.

To create the sixth example with the laminate battery, a 20 $\mu$m thick stainless steel foil collector of stainless steel having a chemical composition of 23Cr-25Ni-7Mo-0.15N (PRE: 49) was used.

To create the seventh example with the laminate battery, a 20 $\mu$m thick stainless steel foil collector of stainless steel having a chemical composition of 23Cr-25Ni-7.5Mo-0.2N (PRE: 52) was used.

To create the eighth example with the laminate battery, a 20 $\mu$m thick stainless steel foil collector with only one surface having a chemical composition of 17Cr-12Ni-2Mo-1.3N (PRE: 50) was used, in which the surface was obtained by performing plasma nitridation on one side of 316L stainless steel foil having a chemical composition of 17Cr-12Ni-2Mo (PRE: 24) to be coated with a cathode material.

To create the eighth comparative example with the laminate battery, a 20 $\mu$m thick stainless steel foil collector of 316L stainless steel having a chemical composition of 17Cr-12Ni-2Mo (PRE: 24) was used.

To create the ninth comparative example with the laminate battery, a 20 $\mu$m thick stainless steel foil collector of stainless steel having a chemical composition of 18Cr-15Ni-2Mo-0.3N (PRE: 30) was used.

To create the tenth comparative example with the laminate battery, a 20 $\mu$m thick stainless steel foil collector of stainless steel having a chemical composition of 20Cr-15Ni-2Mo-0.3N (PRE: 32) was used.

To create the eleventh comparative example with the laminate battery, a 20 $\mu$m thick stainless steel foil collector of stainless steel having a chemical composition of 18Cr-15Ni-4Mo-0.15N (PRE: 34) was used.

To create the twelfth comparative example with the laminate battery, a 20 $\mu$m thick stainless steel foil collector of stainless steel having a chemical composition of 25Cr-6Ni-3.3Mo-0.15N (PRE: 39) was used.

To create the thirteenth comparative example with the laminate battery, a 20 $\mu$m thick stainless steel foil collector of stainless steel having a chemical composition of 25Cr-6Ni-3.5Mo-0.2N (PRE: 41) was used.

To create the fourteenth comparative example with the laminate battery, a 20 $\mu$m thick stainless steel foil collector of stainless steel having a chemical composition of 25Cr-6Ni-4Mo-0.25N (PRE: 43) was used.

To evaluate the Examples and Comparative Examples of the laminate battery, a charge-discharge testing was performed. For the test, the batteries were charged at a constant current of 40 mA up to 4.2 V (full). Then, the batteries were repeatedly charged and discharged at 40 mA between 2.5 V to 4.2 V. Table 2 shows the number of cycles before the batteries could no longer be charged or discharged. In the test, one cycle means that a battery was discharged to 2.5 V by a constant current and then constantly charged up to 4.2 V by constant current.

Table 2

|  | Fifth Example | Sixth Example | Seventh Example | Eighth Example | Eighth Comparative Example |  |
|---|---|---|---|---|---|---|
| Number of cycles | 1201 cycles | 2020 cycles | 3000 cycles or more * | 3000 cycles or more * | 92 cycles |  |
|  | Ninth Comparative Example | Tenth Comparative Example | Eleventh Comparative Example | Twelfth Comparative Example | Thirteenth Comparative Example | Fourteenth Comparative Example |
| Number of cycles | 191 cycles | 257 cycles | 301 cycles | 326 cycles | 420 cycles | 602 cycles |

|  | Fifth Example | Sixth Example | Seventh Example | Eighth Example | Eighth Comparative Example |  |
|---|---|---|---|---|---|---|
| PRE | 45 | 49 | 52 | 50 | 24 |  |
|  | Ninth Comparative Example | Tenth Comparative Example | Eleventh Comparative Example | Twelfth Comparative Example | Thirteenth Comparative Example | Fourteenth Comparative Example |
| PRE | 30 | 32 | 34 | 39 | 41 | 43 |

* No problems were observed even after 3000 cycles or more.

Comparing the eighth to fourteenth Comparative Examples to the fifth to eighth Examples in Table 2, it is apparent that the examples utilizing the embodiments taught herein had considerably greater cycles. It was confirmed that the batteries of the fifth and sixth Examples, as well as the eighth to fourteenth Comparative Examples, experienced a rapid voltage drop during the charge-discharge test. When disassembling the batteries that experienced the voltage drop, it was found that the metallic materials and the like were precipitated on the anode and broke through the separator. When observing the cathode foil opposite to the anode where the precipitation occurred, it could be found that a pin hole was open on the cathode foil.

Not being bound to any theories, it is believed that when a pin hole is open on the cathode, a metal element eluted therefrom is precipitated and accumulated near the anode to break through the separator, thereby causing a short circuit and voltage drop. Further, since the seventh and eighth Examples experienced substantially no voltage drop even after 3000 cycles, that being an excellent life span for practical use, it is apparent that the seventh and eighth Examples had remarkably superior thermal resistance, durability and reliability.

As noted above, batteries having PRE of 45 or more had remarkably improved corrosion resistance. The corrosion resistance was improved further if the batteries had PRE of 50 or more. Finally, as with the earlier fourth Example, the eighth Example was also subjected to nitridation only on the surface of the cathode and was proven to be effective against corrosion.

The above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application No. 2007-111805, filed 20th April 2007, the contents of which are expressly incorporated herein by reference.

**Claims**

1. A non-aqueous solvent secondary battery, comprising:

   a cathode having a cathode material electrically coupled to a cathode collector;
   an anode having an anode material electrically coupled to an anode collector; and
   an electrolyte layer interposed between the cathode and anode;

   wherein the cathode, anode and electrolyte layer are stacked upon one another to form an electrode; and
   wherein the cathode collector comprises an alloy-based metal foil and at least a portion of the cathode collector has a pitting resistance equivalent of 45 or more.

2. A non-aqueous solvent secondary battery in the form of a bipolar battery comprising:

   a cathode having a cathode material electrically coupled to a cathode side of a collector;
   an anode having an anode material electrically coupled to an anode side of the collector opposite the cathode side; and
   an electrolyte layer interposed between the cathode of one collector and the anode of another collector when collectors with respective cathodes and anodes are stacked upon one another;

   wherein the cathode side of the collector includes an alloy-based metal foil and at least a portion of the cathode side of the collector has a pitting resistance equivalent of 45 or more.

3. A battery as claimed in claim 1 or claim 2, wherein the pitting resistance equivalent is 50 or more.

4. A battery as claimed in any preceding claim, wherein only a surface of the cathode collector or a cathode side of the collector has the pitting resistance equivalent of 45 or more.

5. A battery as claimed in any preceding claim, wherein a surface of the cathode collector or the cathode side of the collector has been subjected to a nitridation treatment.

6. A battery as claimed in any preceding claim, comprising:

   a cathode plate, wherein an outermost cathode collector extends to form the cathode plate;
   an anode plate, wherein an outermost anode collector extends to form the anode plate, the plates having a higher conductivity than the collectors; and
   an outer casing sealing the battery, wherein the plates protrude from the outer casing.

7. A battery as claimed in any preceding claim, wherein the electrolyte layer comprises a gel polymer electrolyte.

8. A battery as claimed in any preceding claim, wherein the electrolyte layer comprises an all-solid-state electrolyte.

9. A battery as claimed in any preceding claim, wherein the cathode active material comprises a lithium-transition metal composite oxide and wherein the anode active material comprises a carbon or lithium-transition metal composite oxide.

10. A battery as claimed in any preceding claim, comprising a plurality of electrodes stacked one upon another.

11. A vehicle having a battery as claimed in any preceding claim as a driving power source.

FIG. 1

<u>5</u>

FIG. 2

FIG. 3

40

42

43

EP 1 986 255 A2

FIG. 4

FIG. 5

FIG. 6

**REFERENCES CITED IN THE DESCRIPTION**

**Patent documents cited in the description**

- JP 2001236946 A

- JP 2007111805 A